# EUROPEAN PATENT APPLICATION

(11) **EP 4 718 666 A1**
(43) Date of publication of application: **01.04.2026**
(21) Application number: 23939136.0
(22) Date of filing: 07.08.2023
(51) Int. Cl.: H02J 7/00, B60L 58/10, B60L 58/18, B60L 58/27, H02P 27/06

(54) **CHARGE AND DISCHARGE CIRCUIT, AND ELECTRIC DEVICE**

(30) Priority: 29.05.2023 CN 202321328112 U
(71) Applicant: Contemporary Amperex Technology Co., Limited, Ningde, Fujian 352100 (CN)
(72) Inventor: WU, Kai, Ningde, Fujian 352100 (CN); HUANG, Xiaojian, Ningde, Fujian 352100 (CN); DAN, Zhimin, Ningde, Fujian 352100 (CN); YAN, Yu, Ningde, Fujian 352100 (CN)
(74) Representative: Ziebig Hengelhaupt Intellectual Property Attorneys Patentanwaltskanzlei PartGmbB
(86) International application number: PCT/CN2023/111525
(87) International publication number: WO 2024/244156

(57) **Abstract**

This application discloses a charge-discharge circuit and an electric device. The charge-discharge circuit includes a power supply module, a first drive assembly, a second drive assembly, and a first switch module, where the first drive assembly and the second drive assembly are connected in parallel between a positive terminal and a negative terminal of the power supply module; and a terminal of the first switch module is connected to the first drive assembly, and another terminal of the first switch module is connected to the second drive assembly. The charge-discharge circuit provided by an embodiment of this application includes a first switch module, where a terminal of the first switch module is connected to the first drive assembly, and another terminal of the first switch module is connected to the second drive assembly, thereby enabling flexible changes in the circuit structure to achieve more functions by controlling the first switch module to switch a connection relationship between the first drive assembly and the second drive assembly.

## Description

### CROSS-REFERENCE TO RELATED APPLICATIONS

This application claims the priority and benefit of the following patent application, the entire content of which is incorporated herein by reference:
Chinese Patent Application No. 202321328112.0, filed with the China National Intellectual Property Administration on May 29, 2023 and entitled "CHARGE-DISCHARGE CIRCUIT AND ELECTRIC DEVICE".

### TECHNICAL FIELD

This application relates to the field of battery technology, and specifically, to a charge-discharge circuit and an electric device.

### BACKGROUND

Currently, a new energy vehicle, for example, an electric vehicle, has widely adopted a dual-motor architecture, where the dual-motor architecture includes two motors, and electrical energy released by a battery is converted into mechanical energy via the two motors, thereby driving the new energy vehicle to move. In the dual-motor architecture in the related art, the two motors are connected in parallel, a circuit connection mode is fixed, and a single circuit structure enables the function of driving the vehicle through the dual motors, failing to flexibly change the circuit structure to achieve more functions.

The above statements are only used to provide background technical information related to this application and do not necessarily constitute the prior art.

### SUMMARY

**In** view of the problem in the related art that the circuit connection mode of the dual-motor architecture is fixed and fails to flexibly change the circuit structure to achieve more functions, an embodiment of this application provides a charge-discharge circuit including a first switch module, where a terminal of the first switch module is connected to the first drive assembly, and another terminal of the first switch module is connected to the second drive assembly, thereby enabling flexible changes in the circuit structure to achieve more functions by controlling the first switch module to switch a connection relationship between the first drive assembly and the second drive assembly

According to a first aspect of an embodiment of this application, a charge-discharge circuit is provided, including a power supply module, a first drive assembly, a second drive assembly, and a first switch module, where
the first drive assembly and the second drive assembly are connected in parallel between a positive terminal and a negative terminal of the power supply module; and
a terminal of the first switch module is connected to the first drive assembly, and another terminal of the first switch module is connected to the second drive assembly.

The charge-discharge circuit provided in the first aspect includes a first switch module, where a terminal of the first switch module is connected to the first drive assembly, and another terminal of the first switch module is connected to the second drive assembly, thereby enabling flexible changes in the circuit structure to achieve more functions by controlling the first switch module to switch a connection relationship between the first drive assembly and the second drive assembly.

In some embodiments of this application, the first drive assembly includes a first motor, and the second drive assembly includes a second motor controller;
the first drive assembly and the second drive assembly are connected in parallel between the positive terminal and the negative terminal of the power supply module;
a terminal of the first switch module is connected to a neutral point of the first motor, and another terminal of the first switch module is connected to a connection point of an upper leg and a lower leg of at least one leg in the second motor controller.

A terminal of the first switch module is connected to the neutral point of the first motor, and another terminal of the first switch module is connected to the connection point of the upper leg and the lower leg of the at least one leg in the second motor controller, thereby enabling flexible changes in the circuit structure to achieve more functions by controlling the first switch module to switch the connection relationship between the first drive assembly and the second drive assembly.

In some embodiments of this application, the first switch module includes a main switch and a plurality of sub-switches; the number of the plurality of sub-switches is less than or equal to the number of legs in the second motor controller; a first terminal of the main switch is connected to the neutral point of the first motor; and first terminals of the sub-switches are connected to a second terminal of the main switch, and second terminals of the sub-switches are respectively connected to connection points of upper legs and lower legs of different legs in the second motor controller.

The main switch enables control of the connection and disconnection between the first motor and the second motor controller, and the plurality of sub-switches enable more flexible selection of the connection and disconnection of multiple legs in the second motor controller, achieving entry into a battery self-heating mode by turning on the main switch and at least one sub-switch, and achieving deactivation of the battery self-heating mode by controlling the turn-off of the main switch.

In some embodiments of this application, the first switch module includes a plurality of sub-switches; the number of the plurality of sub-switches is equal to the number of legs in the second motor controller; first terminals of the sub-switches are all connected to the neutral point of the first motor, and second terminals of the sub-switches are respectively connected in one-to-one correspondence to connection points of upper legs and lower legs of different legs in the second motor.

The plurality of sub-switches enable the connection and disconnection between the first motor and multiple legs of the second motor controller, thereby achieving entry into a battery self-heating mode by turning on at least one sub-switch, and achieving deactivation of the battery self-heating mode by controlling the turn-off of all sub-switches.

In some embodiments of this application, the power supply module includes a battery and a battery master control box, where the battery master control box is provided with a power supply side positive connector, a drive side positive connector, a power supply side negative connector, and a drive side negative connector;
a positive line is connected between the power supply side positive connector and the drive side positive connector, and a negative line is connected between the power supply side negative connector and the drive side negative connector;
a positive terminal of the battery is connected to the power supply side positive connector, and a negative terminal of the battery is connected to the power supply side negative connector;
the drive side positive connector is connected to both a first terminal of the first drive assembly and a first terminal of the second drive assembly; and
the drive side negative connector is connected to both a second terminal of the first drive assembly and a second terminal of the second drive assembly.

Providing the power supply side positive connector, the drive side positive connector, the power supply side negative connector, and the drive side negative connector on the battery master control box enables convenient connection of positive and negative electrodes of the battery to the battery master control box via wires, and enables convenient connection of the first drive assembly and the second drive assembly to the battery master control box, improving wiring convenience. The battery master control box enables control of a connection relationship between the battery and the first drive assembly as well as the second drive assembly, enabling timely disconnection of the battery from other components in case of circuit abnormalities to achieve the effect of protecting the battery. The battery master control box enables detection of parameters such as current or voltage of the battery, facilitating more precise circuit control and enabling determination of whether the circuit is abnormal based on the detected parameters.

In some embodiments of this application, the positive line is provided with a main positive switch and a current sensor. The current sensor enables detection of the magnitude of current flowing through the battery, helps to determine whether a fault occurs in the circuit based on the detected current, and enables adjustment of some control processes based on the current.

In some embodiments of this application, the drive side positive connector includes a drive side first positive sub-connector and a drive side second positive sub-connector; a first terminal of the positive line is connected to the power supply side positive connector, and a second terminal of the positive line is connected to both the drive side first positive sub-connector and the drive side second positive sub-connector; and
the drive side first positive sub-connector is connected to the first terminal of the first drive assembly, and the drive side second positive sub-connector is connected to the first terminal of the second drive assembly.

In this way, the first terminal of the first drive assembly and the first terminal of the second drive assembly are respectively connected to different connectors, eliminating the need to bundle a wire of the first terminal of the first drive assembly and a wire of the first terminal of the second drive assembly together and connect the wires to the same connector, improving wiring convenience. Additionally, in the related art where the first drive assembly and the second drive assembly are connected to the same connector, when a fault occurs in the same connector, the operations of both drive assemblies are affected. Providing the drive side first positive sub-connector and the drive side second positive sub-connector can improve the situation in the related art where the operations of both drive assemblies are affected by the same connector, reducing the fault occurrence rate.

In some embodiments of this application, the drive side negative connector includes a drive side first negative sub-connector and a drive side second negative sub-connector;
a first terminal of the negative line is connected to the power supply side negative connector, and a second terminal of the negative line is connected to both the drive side first negative sub-connector and the drive side second negative sub-connector; and
the drive side first negative sub-connector is connected to the second terminal of the first drive assembly, and the drive side second negative sub-connector is connected to the second terminal of the second drive assembly.

In this way, the second terminal of the first drive assembly and the second terminal of the second drive assembly are respectively connected to different connectors, eliminating the need to bundle a wire of the second terminal of the first drive assembly and a wire of the second terminal of the second drive assembly together and connect the wires to the same connector, improving wiring convenience. Additionally, in the related art where the second terminal of the first drive assembly and the second terminal of the second drive assembly are connected to the same connector, when a fault occurs in the same connector, the operations of both drive assemblies are affected. In these embodiments, providing the drive side first negative sub-connector and the drive side second negative sub-connector can improve the situation in the related art where the operations of both drive assemblies are affected by the same connector, reducing the fault occurrence rate.

In some embodiments of this application, the battery includes a first sub-battery and a second sub-battery; the power supply side positive connector includes a power supply side first positive sub-connector and a power supply side second positive sub-connector; the positive line includes a first positive branch and a second positive branch;
a first terminal of the first positive branch is connected to the power supply side first positive sub-connector, a first terminal of the second positive branch is connected to the power supply side second positive sub-connector, and a second terminal of the first positive branch and a second terminal of the second positive branch are both connected to the drive side positive connector;
a positive electrode of the first sub-battery is connected to the power supply side first positive sub-connector, and a positive electrode of the second sub-battery is connected to the power supply side second positive sub-connector; and
a negative electrode of the first sub-battery and a negative electrode of the second sub-battery are both connected to the power supply side negative connector.

Providing two sub-batteries can provide more power supply line options for the first drive assembly and the second drive assembly, achieving flexible configuration of a power supply circuit structure, and allowing the other sub-battery to supply power to the first drive assembly and the second drive assembly in case of a fault or insufficient power in one sub-battery, thereby reducing the probability of power supply failure due to a fault or insufficient power in the power supply module.

Additionally, the positive electrode of the first sub-battery and the positive electrode of the second sub-battery are respectively connected to different connectors, eliminating the need to bundle a positive wire of the first sub-battery and a positive wire of the second sub-battery together and connect the positive wires to the same connector, improving wiring convenience.

In some embodiments of this application, the power supply side negative connector includes a power supply side first negative sub-connector and a power supply side second negative sub-connector; the negative electrode of the first sub-battery is connected to the power supply side first negative sub-connector, and the negative electrode of the second sub-battery is connected to the power supply side second negative sub-connector; and the power supply side first negative sub-connector and the power supply side second negative sub-connector are both connected to a first terminal of the negative line.

In this way, the negative electrode of the first sub-battery and the negative electrode of the second sub-battery are respectively connected to different connectors, eliminating the need to bundle a negative wire of the first sub-battery and a negative wire of the second sub-battery together and connect the negative wires to the same connector, improving wiring convenience. Additionally, if the negative electrode of the first sub-battery and the negative electrode of the second sub-battery are connected to the same connector, when a fault occurs in the same connector, faults occur in power supply lines of both sub-batteries, and the operations of both drive assemblies are affected. Providing the power supply side first negative sub-connector and the power supply side second negative sub-connector can improve the situation where the power supply lines of both sub-batteries are affected by the same connector, reducing the battery power supply failure occurrence rate.

In some embodiments of this application, the drive side positive connector includes a drive side first positive sub-connector and a drive side second positive sub-connector; the second terminal of the first positive branch is connected to the drive side first positive sub-connector; the second terminal of the second positive branch is connected to the drive side second positive sub-connector; the first terminal of the first drive assembly is connected to the drive side first positive sub-connector, and the first terminal of the second drive assembly is connected to the drive side second positive sub-connector.

In this way, the first terminal of the first drive assembly and the first terminal of the second drive assembly are respectively connected to different connectors, eliminating the need to bundle a wire of the first terminal of the first drive assembly and a wire of the first terminal of the second drive assembly together and connect the wires to the same connector, improving wiring convenience. Additionally, the second terminal of the first positive branch and the second terminal of the second positive branch are respectively connected to different connectors, eliminating the need to bundle a wire of the second terminal of the first positive branch and a wire of the second terminal of the second positive branch together and connect the wires to the same connector, improving wiring convenience.

In some embodiments of this application, the first positive branch is provided with a first current sensor and a first positive branch switch; and the second positive branch is provided with a second current sensor and a second positive branch switch. The current sensors enable detection of the magnitude of current flowing through the battery, help to determine whether a fault occurs in the circuit based on the detected current, and enable adjustment of some control processes based on the current.

In some embodiments of this application, the negative line is provided with a main negative switch and a pre-charge circuit connected in parallel with the main negative switch. Providing the pre-charge circuit on the negative line helps to leave more space for the positive line, facilitating accommodation of other components or wiring in the left space.

According to a second aspect of this application, an electric device is provided and includes a control apparatus and the charge-discharge circuit according to any embodiment of the first aspect, where
the control apparatus is communicatively connected to a switch element in the charge-discharge circuit, and the switch element includes at least the first switch module.

The electric device of the second aspect can achieve the beneficial technical effects of the charge-discharge circuit according to any embodiment of the first aspect.

The foregoing description is merely an overview of the technical solutions of the embodiments of this application. For a better understanding of the technical means in this application such that they can be implemented according to the content of the specification, and to make the above and other objectives, features, and advantages of the embodiments of this application more obvious and easier to understand, the following describes specific embodiments of this application.

### BRIEF DESCRIPTION OF DRAWINGS

Persons of ordinary skill in the art will be clear about various other advantages and benefits by reading the detailed description of the embodiments below. The accompanying drawings are merely intended to illustrate the embodiments of this application and are not intended to limit this application. Additionally, in all the accompanying drawings, the same reference signs represent the same components.
FIG. 1 is a schematic structural diagram of a vehicle according to one or more embodiments.
FIG. 2 is a schematic structural diagram of a charge-discharge circuit according to one or more embodiments.
FIG. 3 is a schematic structural diagram of a charge-discharge circuit according to one or more embodiments.
FIG. 4 is a schematic structural diagram of a charge-discharge circuit according to one or more embodiments.
FIG. 5 is a schematic structural diagram of a charge-discharge circuit according to one or more embodiments.
FIG. 6 is a schematic structural diagram of a charge-discharge circuit according to one or more embodiments.
FIG. 7 is a schematic structural diagram of a charge-discharge circuit according to one or more embodiments.
FIG. 8 is a schematic structural diagram of a charge-discharge circuit according to one or more embodiments.
FIG. 9 is a schematic structural diagram of a charge-discharge circuit according to one or more embodiments.
FIG. 10 is a schematic structural diagram of a charge-discharge circuit according to one or more embodiments.
FIG. 11 is a schematic structural diagram of a charge-discharge circuit according to one or more embodiments.
FIG. 12 is a schematic structural diagram of an electric device according to one or more embodiments.

The meanings of the reference numerals in the above drawings are as follows:
1000. vehicle; 100. battery; 200. controller; 300. motor; 400. charge-discharge circuit;
1. power supply module; 2. first drive assembly; 3. second drive assembly; 4. first switch module; 5. first sub-battery; 6. second sub-battery; 9. battery master control box; 10. positive line; 11. negative line; 12. main positive switch; 13. pre-charge circuit; 14. main negative switch; 15. current sensor; 20. control apparatus;
21. first motor; 22. first motor controller; 31. second motor; 32. second motor controller; 41. main switch; 42. first sub-switch; 43. second sub-switch; 44. third sub-switch; 91. power supply side positive connector; 92. drive side positive connector; 93. power supply side negative connector; 94. drive side negative connector;
911. power supply side first positive sub-connector; 912. power supply side second positive sub-connector; 921. drive side first positive sub-connector; 922. drive side second positive sub-connector; 931. power supply side first negative sub-connector; 932. power supply side second negative sub-connector; 941. drive side first negative sub-connector; 942. drive side second negative sub-connector; 101. first positive branch; 102. second positive branch; 151. first positive branch current sensor; 121. first positive branch switch; 152. second positive branch current sensor; and 122. second positive branch switch.

### DESCRIPTION OF EMBODIMENTS

The embodiments of the technical solutions of this application will be described in detail below in conjunction with the drawings. The following embodiments are merely intended for a clearer description of the technical solutions of this application and therefore are used as just examples which do not constitute any limitations on the protection scope of this application.

Unless otherwise defined, all technical and scientific terms used herein shall have the same meanings as commonly understood by persons skilled in the art to which this application relates. The terms used herein are intended to merely describe the specific embodiments rather than to limit this application. The terms "comprise", "include", "have", and any other variations thereof in the specification, claims and brief description of drawings of this application are intended to cover non-exclusive inclusions.

In the description of the embodiments of this application, technical terms such as "first" and "second" are only used to distinguish different objects and cannot be understood as indicating or implying relative importance or implicitly indicating the number, specific order, or primary-secondary relationship of the indicated technical features. In the description of the embodiments of this application, "a plurality" means two or more, unless otherwise explicitly and specifically defined.

In this specification, reference to "embodiment" means that specific features, structures, or characteristics described with reference to the embodiment may be incorporated in at least one embodiment of this application. The appearance of this phrase in various places in the specification does not necessarily refer to the same embodiment or an independent or alternative embodiment that is exclusive of other embodiments. Persons skilled in the art explicitly and implicitly understand that the embodiments described herein may be combined with other embodiments.

In the description of the embodiments of this application, the term "and/or" is only an associative relationship for describing associated objects, indicating that three relationships may be present. For example, A and/or B may indicate the following three cases: presence of A, presence of both A and B, and presence of B. Additionally, the character "/" herein generally indicates that the associated objects before and after are in an "or" relationship.

In the description of the embodiments of this application, the term "a plurality of" refers to two or more (inclusive). Similarly, "a plurality of groups" means more than two (inclusive) groups, and "a plurality of pieces" means more than two (inclusive) pieces.

In the description of the embodiments of this application, the orientations or positional relationships indicated by the technical terms "center", "longitudinal", "transverse", "length", "width", "thickness", "upper", "lower", "front", "rear", "left", "right", "vertical", "horizontal", "top", "bottom", "inside", "outside", "clockwise", "counterclockwise", "axial", "radial", "circumferential", and the like are based on the orientations or positional relationships as shown in the accompanying drawings. These terms are merely for ease and brevity of description of the embodiments of this application rather than indicating or implying that the means or components mentioned must have specific orientations or must be constructed or manipulated according to specific orientations, and therefore shall not be construed as any limitation on the embodiments of this application.

In the description of the embodiments of this application, unless otherwise explicitly specified and defined, the technical terms "mounting", "connection", "join", and "fastening" should be understood in their general senses. For example, they may refer to a fixed connection, a detachable connection, or an integral connection, may refer to a mechanical connection or electrical connection, and may refer to a direct connection, an indirect connection via an intermediate medium, an internal communication between two elements, or an interaction between two elements. Persons of ordinary skill in the art can understand specific meanings of these terms in the embodiments of this application as suitable to specific situations.

Currently, electric devices driven by dual motors have been widely used, such as electric vehicles, ships, or spacecraft employing dual motors. These electric devices are powered by batteries, and the electrical energy of the batteries is converted into mechanical energy through two motors, thereby driving the device to operate.

In a single-battery dual-motor circuit architecture in the related art, the circuit structure is relatively simple, failing to change the circuit structure and failing to enable switching of different circuit loops, thus failing to achieve more functions of the dual-motor circuit.

In response to the problems in the related art, an embodiment of this application provides a charge-discharge circuit, where the charge-discharge circuit includes a power supply module, a first drive assembly, a second drive assembly, and a first switch module, where the first drive assembly and the second drive assembly are connected in parallel between a positive terminal and a negative terminal of the power supply module; a terminal of the first switch module is connected to the first drive assembly, and another terminal of the first switch module is connected to the second drive assembly. Controlling the first switch module enables switching of a connection relationship between the first drive assembly and the second drive assembly, thereby enabling flexible changes in the circuit structure to achieve more functions.

A battery in an embodiment of this application may include a battery cell, a battery module, or a battery pack. This embodiment of this application does not limit the scale of the battery. The battery may be a power battery, for example, a lithium battery, a lead-acid battery, a nickel-cadmium battery, or a sodium-sulfur battery.

An embodiment of this application further provides an electric device using the above charge-discharge circuit, where the electric device may be but is not limited to an electric toy, an electric tool, an electric bicycle, an electric vehicle, a ship, or a spacecraft. The electric device uses the charge-discharge circuit disclosed in this application, controlling the on-off of switch tubes in the first switch module and a motor controller based on demand, thus thereby enabling flexible switching of the charge-discharge circuit to form different circuit loops, and achieving different functions.

For ease of description, an electric device according to an embodiment of this application being a vehicle 1000 is used as an example for description of the following embodiments.

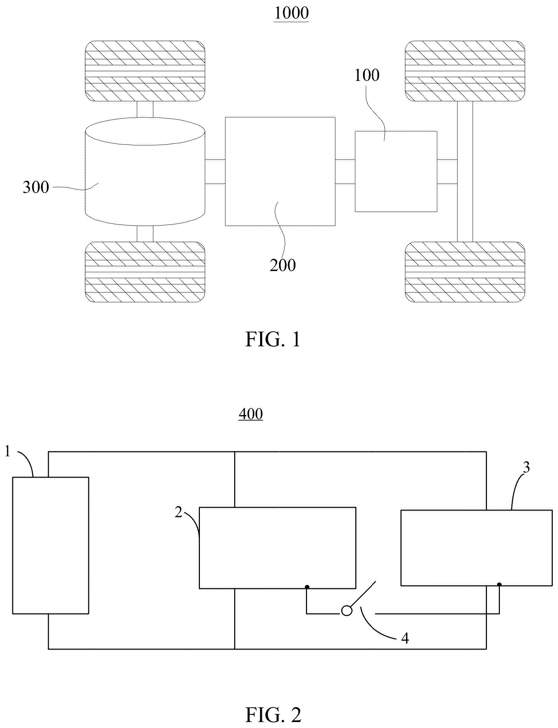

Referring to FIG. 1, FIG. 1 is a schematic structural diagram of a vehicle 1000 according to some embodiments of this application. The vehicle 1000 may be a new energy vehicle, where the new energy vehicle may be a battery electric vehicle, an extended-range vehicle, or the like. A battery 100 is provided inside the vehicle 1000, where the battery 100 may be provided at the bottom, front, or rear of the vehicle 1000. The battery 100 may be configured to supply power to the vehicle 1000. For example, the battery 100 may be used as an operational power source for the vehicle 1000. The vehicle 1000 may also include a controller 200 and a motor 300, where the controller 200 is configured to control the battery 100 to supply power to the motor 300, for example, to satisfy power needs of start, navigation, and driving of the vehicle 1000.

The battery 100 may also serve as a driving power source for the vehicle 1000, providing driving traction for the vehicle 1000. The motor 300 converts the electrical energy output by the battery 100 into mechanical energy, thereby driving the vehicle 1000 to move.

In practical application, the number of motors 300 may be one, two, or the like. The charge-discharge circuit provided by this embodiment of this application is applicable to a case where the vehicle 1000 has one battery 100 and two motors 300.

FIG. 2 is a schematic structural diagram of a charge-discharge circuit according to some embodiments of this application. Referring to FIG. 2, the charge-discharge circuit 400 includes a power supply module 1, a first drive assembly 2, a second drive assembly 3, and a first switch module 4. The first drive assembly 2 and the second drive assembly 3 are connected in parallel between a positive terminal and a negative terminal of the power supply module 1. A terminal of the first switch module 4 is connected to the first drive assembly 2, and another terminal of the first switch module 4 is connected to the second drive assembly 3.

The power supply module 1 is configured to supply power to other components in the charge-discharge circuit 400 and may also be configured to supply power to other components requiring power in an electric device to which the charge-discharge circuit 400 belongs. The first drive assembly 2 and the second drive assembly 3 are energy conversion modules configured to convert electrical energy output by the power supply module 1 into mechanical energy. When the first switch module 4 is turned on, a circuit loop is formed where the power supply module 1, the first drive assembly 2, and the second drive assembly 3 are connected in series; when the first switch module 4 is turned off, the circuit loop where the power supply module 1, the first drive assembly 2, and the second drive assembly 3 are connected in series can be disconnected.

The first switch module 4 may be a relay, an IGBT tube, or another component capable of achieving a switch function. The embodiments of this application do not limit a specific component used as the first switch module 4. Any component capable of enabling connection or disconnection of a circuit and automatically controlling its on-off via a signal may be used as the first switch module 4.

According to the charge-discharge circuit provided by the embodiments of this application, a terminal of the first switch module 4 is connected to the first drive assembly 2, and another terminal of the first switch module 4 is connected to the second drive assembly 3, thereby enabling flexible changes in a circuit structure to achieve more functions by controlling the first switch module 4 to switch a connection relationship between the first drive assembly 2 and the second drive assembly 3.

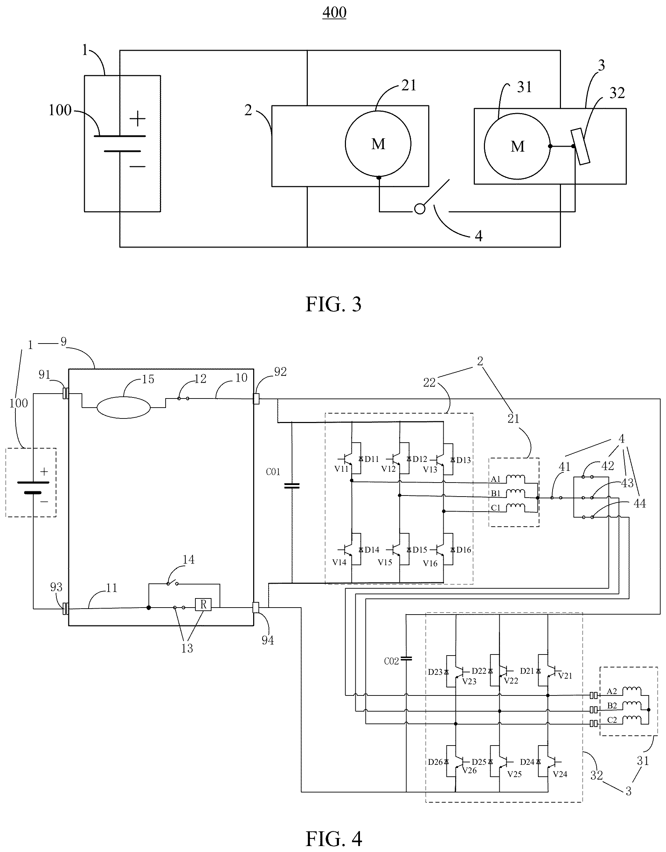

FIG. 3 is a schematic structural diagram of a charge-discharge circuit according to some embodiments of this application. Referring to FIG. 3, the charge-discharge circuit 400 includes a power supply module 1, a first drive assembly 2, a second drive assembly 3, and a first switch module 4.

The first drive assembly 2 includes a first motor 21, and the second drive assembly 3 includes a second motor controller 32. The first drive assembly 2 and the second drive assembly 3 are connected in parallel between a positive terminal and a negative terminal of the power supply module 1. A terminal of the first switch module 4 is connected to a neutral point of the first motor 21, and another terminal of the first switch module 4 is connected to a connection point of an upper leg and a lower leg of at least one leg in the second motor controller 32.

The power supply module 1 is configured to supply power to other components in the charge-discharge circuit 400 and may also be configured to supply power to other components requiring power in an electric device to which the charge-discharge circuit 400 belongs.

The first drive assembly 2 and the second drive assembly 3 are energy conversion modules configured to convert electrical energy output by the power supply module 1 into mechanical energy. The first drive assembly 2 includes a first motor 21. In addition to the first motor 21, the first drive assembly 2 may also include a first motor controller 22 connected to the first motor 21. The second drive assembly 3 includes a second motor 31 and a second motor controller 32 connected to the second motor 31. The motor controller is configured to convert direct current output by a battery into alternating current required by the motor, and the motor is configured to convert electrical energy of the input alternating current into mechanical energy. The first motor controller 22 and the second motor 31 are not shown in FIG. 3. The first motor controller 22 and the second motor 31 are marked in FIG. 4 to FIG. 8.

The first motor 21 and the second motor 31 may be motors with any number of phases, for example, three-phase motors, four-phase motors, or six-phase motors. The number of phases of the first motor 21 and the number of phases of the second motor 31 may be equal or unequal. The first motor controller 22 and the second motor controller 32 each include a plurality of legs. Each leg includes an upper leg and a lower leg, where each leg in the first motor controller 22 is connected in one-to-one correspondence with each phase winding in the first motor 21, and a connection point of an upper leg and a lower leg in a leg is connected to a corresponding phase winding in the first motor 21. Legs in the second motor controller 32 are connected to windings in the second motor 31 in a same manner. Details are not repeated herein. Each of the upper leg and the lower leg in the leg is provided with a switch tube, where the switch tube may be an IGBT (Insulated Gate Bipolar Transistor, insulated gate bipolar transistor) tube.

The first switch module 4 may be a relay, an IGBT tube, or another component capable of achieving a switch function. The embodiments of this application do not limit a specific component used as the first switch module 4. Any component capable of enabling connection or disconnection of a circuit and automatically controlling its on-off via a signal may be used as the first switch module 4.

According to the charge-discharge circuit 400 provided by the embodiments of this application, the first motor 21 is connected to the first motor controller 22 to form the first drive assembly 2, and the second motor 31 is connected to the second motor controller 32 to form the second drive assembly 3. The first drive assembly 2 and the second drive assembly 3 are connected in parallel between the positive and negative electrodes of the power supply module 1. In this way, the power supply module 1 can supply power to both the first motor 21 and the second motor 31; the first motor 21 and the second motor 31 respectively convert the electrical energy output by the battery 100 into mechanical energy; and the first motor 21 and the second motor 31 are configured to supply driving traction to the electric device to which the charge-discharge circuit 400 belongs.

In the charge-discharge circuit 400, the first switch module 4 is connected between the neutral point of the first motor 21 and the connection point of the upper leg and the lower leg of at least one leg in the second motor controller 32. The neutral point of the motor is the connection point of all windings in the motor. When the first switch module 4 is turned off, a circuit loop is formed where the first drive assembly 2 and the second drive assembly 3 are connected in parallel to both terminals of the power supply module 1. Through this circuit structure, the power supply module 1 supplies power to the first drive assembly 2 and the second drive assembly 3. The first motor 21 in the first drive assembly 2 and the second motor 31 in the second drive assembly 3 convert the electrical energy output by the power supply module 1 into mechanical energy, thereby achieving a function of driving the electric device to move.

When the first switch module 4 is turned on, a circuit loop is formed where the power supply module 1, the first drive assembly 2, and the second drive assembly 3 are connected in series. Through this circuit structure, alternate charging and discharging can be achieved between the power supply module 1 and the windings in the first motor 21 and the second motor 31, generating an alternating current in the circuit loop, thereby causing the internal resistance of the battery to generate heat, and achieving the effect of heating the battery.

When the first switch module 4 is turned on, the on-off of different legs in the first motor controller 22 and the on-off of different legs in the second motor controller 32 can also be controlled to adjust the number of motor windings connected in the circuit loop, achieving more diverse changes in the circuit structure, thereby realizing more functions and meeting different control requirements of the electric device.

The first switch module 4 is connected between the first motor 21 and the connection point of the upper leg and the lower leg of at least one leg in the second motor controller 32. The first switch module 4 can switch a connection relationship between the first motor 21 and the legs in the second motor controller 32 to form different circuit loops, and allowing a circuit architecture to flexibly change the circuit structure, thereby supporting and achieving more different functions. For example, in an electric vehicle, controlling the first switch module 4 to connect the first drive assembly 2 and the second drive assembly 3 in series enables switching from a driving mode to a battery self-heating mode.

A terminal of the first switch module 4 is connected to the neutral point of the first motor 21, and another terminal thereof is connected to the connection point of the upper leg and the lower leg of at least one leg in the second motor controller 32, eliminating the need to lead out a neutral wire of the second motor 31, thereby saving costs. Additionally, the impedance magnitude during a battery self-heating process can also be adjusted through phase sequence conduction of the second motor controller 32.

Referring to FIG. 4, in some embodiments of this application, the first switch module 4 includes a main switch 41 and a plurality of sub-switches; the number of the plurality of sub-switches is less than or equal to the number of legs in the second motor controller 32. For example, if the first switch module 4 includes the main switch 41 and one sub-switch, a first terminal of the sub-switch is connected to a second terminal of the main switch 41, and a second terminal of the sub-switch can be connected to a connection point of an upper leg and a lower leg of any leg in the second motor controller 32. If the first switch module 4 includes the main switch 41 and two sub-switches, second terminals of the two sub-switches can be connected to connection points of upper legs and lower legs of any two different legs in the second motor controller 32.

In the example shown in FIG. 4, the number of legs in the second motor controller 32 is 3, and the first switch module 4 includes the main switch 41 and three sub-switches, where the three sub-switches are a first sub-switch 42, a second sub-switch 43, and a third sub-switch 44, respectively. A first terminal of the main switch 41 is connected to the neutral point of the first motor 21. First terminals of the sub-switches are connected to a second terminal of the main switch, and second terminals of the sub-switches are respectively connected to connection points of upper legs and lower legs of different legs in the second motor controller 32. In a driving mode, the main switch 41, the first sub-switch 42, the second sub-switch 43, and the third sub-switch 44 are all turned off. Turning on the main switch 41 and at least one of the three sub-switches at the same time enables a series connection between the first motor 21 and the second motor controller 32; and coordinated operations of legs in the first motor controller 22 and legs in the second motor controller 32 enable the battery 100 to enter a self-heating mode. In the state shown in FIG. 4, the main switch 41, the first sub-switch 42, the second sub-switch 43, and the third sub-switch 44 are all turned on.

For example, turning on the main switch 41 and the first sub-switch 42 at the same time enables the turn-off of the second sub-switch 43 and the third sub-switch 44, enabling a series connection between the first motor 21 and the second motor controller 32; and all upper legs in the first motor controller 22 are turned on, all lower legs in the first motor controller 22 are turned off, a switch tube V21 in the second motor controller 32 is turned off, and a switch tube V24 in the second motor controller 32 is turned on, such that a current sequentially passes through a positive electrode of the battery 100, the first motor controller 22, the first motor 21, the second motor controller 32, and a negative electrode of the battery 100 to form a loop, enabling the battery 100 to enter the self-heating mode.

The main switch 41 enables control of the connection and disconnection between the first motor 21 and the second motor controller 32, and the plurality of sub-switches enable more flexible selection of the connection and disconnection of multiple legs in the second motor controller 32, achieving entry into the battery self-heating mode by turning on the main switch and at least one sub-switch, and achieving deactivation of the battery self-heating mode by controlling the turn-off of the main switch.

Additionally, a capacitor C01 connected in parallel with the legs is present in the first motor controller 22 included in the first drive assembly 2, and a capacitor C02 connected in parallel with the legs is present in the second motor controller 32 included in the second drive assembly 3.

In the embodiments shown in FIG. 4, a negative line 11 is provided with a main negative switch 14 and a pre-charge circuit 13 connected in parallel with the main negative switch 14. The pre-charge circuit 13 includes a pre-charge switch and a resistor R connected in series. The pre-charge switch may alternatively be a switch capable of being controlled to be turned on or off via a signal, for example, a relay or an IGBT tube. The pre-charge circuit 13 is configured to protect the main positive switch 12 and the main negative switch 14 at the moment when the main positive switch 12 and the main negative switch 14 are turned on and the battery 100 is connected to the circuit, reducing the occurrence of damage to the main positive switch 12 and the main negative switch 14 due to overcurrent or overheating adhesion.

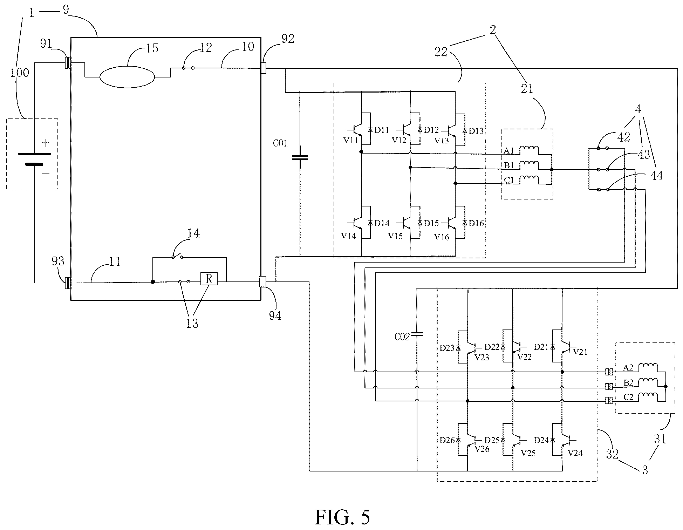

Referring to FIG. 5, in some embodiments of this application, the first switch module 4 includes a plurality of sub-switches. The number of the plurality of sub-switches is equal to the number of legs in the second motor controller 32. In the example shown in FIG. 5, the number of legs in the second motor controller 32 is 3, and the first switch module 4 includes three sub-switches, where the three sub-switches are a first sub-switch 42, a second sub-switch 43, and a third sub-switch 44, respectively. First terminals of the sub-switches are all connected to the neutral point of the first motor 21, and second terminals of the sub-switches are respectively connected in one-to-one correspondence to connection points of upper legs and lower legs of different legs in the second motor. In a driving mode, the first sub-switch 42, the second sub-switch 43, and the third sub-switch 44 are all turned off. Turning on at least one of the first sub-switch 42, the second sub-switch 43, and the third sub-switch 44 enables a series connection between the first motor 21 and the second motor controller 32; and coordinated operations of legs in the second motor controller 32 enable the battery 100 to enter the self-heating mode. In the state shown in FIG. 5, the first sub-switch 42, the second sub-switch 43, and the third sub-switch 44 are all turned on.

For example, turning on the first sub-switch 42 and turning off the second sub-switch 43 and the third sub-switch 44 enable a series connection between the first motor 21 and the second motor controller 32; and all upper legs in the first motor controller 22 are turned on, all lower legs in the first motor controller 22 are turned off, a switch tube V21 in the second motor controller 32 is turned off, and a switch tube V24 in the second motor controller 32 is turned on, such that a current sequentially passes through the positive electrode of the battery 100, the first motor controller 22, the first motor 21, the second motor controller 32, and a negative electrode of the battery 100 to form a loop, enabling the battery 100 to enter the self-heating mode.

The plurality of sub-switches enable the connection and disconnection between the first motor 21 and multiple legs of the second motor controller 32, thereby achieving entry into the battery self-heating mode by turning on at least one sub-switch, and achieving deactivation of the battery self-heating mode by controlling the turn-off of all sub-switches.

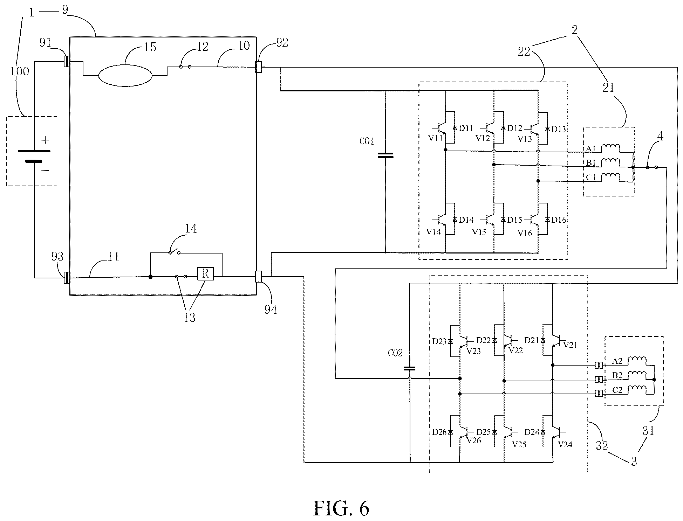

Referring to FIG. 6, in some embodiments of this application, the power supply module 1 includes a battery 100 and a battery master control box 9, where the battery 100 included in the power supply module 1 may be a battery cell, a battery module, or a battery pack. The battery 100 included in the power supply module 1 may be one battery or a larger-scale battery group formed by multiple batteries connected in series, where the battery group can be regarded as a single battery as a whole.

Specifically, the battery master control box 9 is provided with a power supply side positive connector 91, a drive side positive connector 92, a power supply side negative connector 93, and a drive side negative connector 94; a positive line 10 is connected between the power supply side positive connector 91 and the drive side positive connector 92, and a negative line 11 is connected between the power supply side negative connector 93 and the drive side negative connector 94; a positive terminal of the battery 100 is connected to the power supply side positive connector 91, and a negative terminal of the battery 100 is connected to the power supply side negative connector 93; the drive side positive connector 92 is connected to both a first terminal of the first drive assembly 2 and a first terminal of the second drive assembly 3; and the drive side negative connector 94 is connected to both a second terminal of the first drive assembly 2 and a second terminal of the second drive assembly 3.

Providing the power supply side positive connector 91, the drive side positive connector 92, the power supply side negative connector 93, and the drive side negative connector 94 on the battery master control box 9 enables convenient connection of positive and negative electrodes of the battery 100 to the battery master control box 9 via wires, and enables convenient connection of the first drive assembly 2 and the second drive assembly 3 to the battery master control box 9, improving wiring convenience. The battery master control box 9 enables control of a connection relationship between the battery 100 and the first drive assembly 2 as well as the second drive assembly 3, enabling timely disconnection of the battery 100 from other components in case of circuit abnormalities to achieve the effect of protecting the battery 100. The battery master control box 9 enables detection of parameters such as current or voltage of the battery 100, facilitating more precise circuit control and enabling determination of whether the circuit is abnormal based on the detected parameters.

The first motor controller 22 included in the first drive assembly 2 has three legs, and the first motor 21 has three windings. The second motor controller 32 included in the second drive assembly 3 has three legs, and the second motor 31 has three windings. In practical application, the two motors may be motors with any number of phases, and the number of legs in the corresponding motor controller may alternatively be another number.

The battery master control box 9 is configured to control the connection between the battery 100 and the first drive assembly 2 as well as the second drive assembly 3, for example, to control the connection between the battery 100 and the first drive assembly 2 or control the disconnection of the battery 100 from the first drive assembly 2, or to control the connection between the battery 100 and the second drive assembly 3 or control the disconnection of the battery 100 from the second drive assembly 3. The battery master control box 9 is also configured to detect the magnitude of current flowing through the positive line 10 or the negative line 11, or to detect the voltage magnitude across the positive and negative terminals of the battery 100.

In the first motor controller 22, upper legs of legs are connected in a common line, where the upper legs are connected together to the second positive connector 92. Lower legs of legs are connected in a common line, where the lower legs are connected together to the second negative connector 94.

In the second motor controller 32, upper legs of legs are connected in a common line, where the upper legs are connected together to the second positive connector 92. Lower legs of legs are connected in a common line, where the lower legs are connected together to the second negative connector 94.

In the embodiments shown in FIG. 6, the positive line 10 is provided with a main positive switch 12 and a current sensor 15. The negative line 11 is provided with a main negative switch 14 and a pre-charge circuit 13 connected in parallel with the main negative switch 14. The main positive switch 12 may be a switch capable of being controlled to be turned on or off via a signal, for example, the main positive switch 12 may be a relay or an IGBT tube. The main positive switch 12 shown in FIG. 6 is in an on state. The pre-charge circuit 13 includes a pre-charge switch and a resistor R connected in series, where the pre-charge switch may alternatively be a switch capable of being controlled to be turned on or off via a signal, for example, a relay or an IGBT tube. The pre-charge circuit 13 may be configured to protect the main positive switch 12 and the main negative switch 14 at the moment when the main positive switch 12 and the main negative switch 14 are turned on and the battery 100 is connected to the circuit, reducing the occurrence of damage to the main positive switch 12 and the main negative switch 14 due to overcurrent or overheating adhesion. In some embodiments, alternatively, the positive line 10 may be provided with the main negative switch 14 and the pre-charge circuit 13 connected in parallel with the main negative switch 14, and the negative line 11 may be provided with the main positive switch 12 and the current sensor 15.

Additionally, a capacitor C01 connected in parallel with the legs is present in the first motor controller 22 included in the first drive assembly 2, and a capacitor C02 connected in parallel with the legs is present in the second motor controller 32 included in the second drive assembly 3. The pre-charge circuit 13 may also be configured to protect the capacitors C01 and C02 in case of overvoltage or overcurrent operation of the circuit, reducing the occurrence of damage to the capacitors C01 and C02.

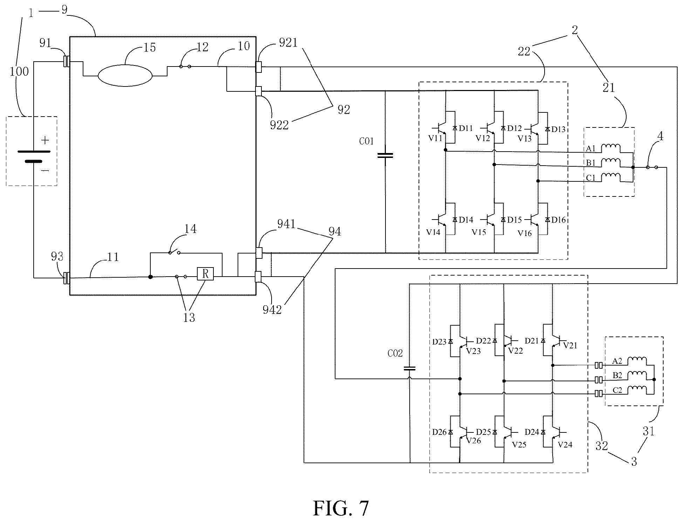

Referring to FIG. 7, in some embodiments of this application, the drive side positive connector 92 includes a drive side first positive sub-connector 921 and a drive side second positive sub-connector 922; a first terminal of the positive line 10 is connected to the power supply side positive connector 91, and a second terminal of the positive line 10 is connected to both the drive side first positive sub-connector 921 and the drive side second positive sub-connector 922; and the drive side first positive sub-connector 921 is connected to a first terminal of the first drive assembly 2, and the drive side second positive sub-connector 922 is connected to a first terminal of the second drive assembly 3.

In this way, the first terminal of the first drive assembly 2 and the first terminal of the second drive assembly 3 are respectively connected to different connectors, eliminating the need to bundle a wire of the first terminal of the first drive assembly 2 and a wire of the first terminal of the second drive assembly 3 together and connect the wires to the same connector, improving wiring convenience. Additionally, in the related art where the first drive assembly 2 and the second drive assembly 3 are connected to the same connector, when a fault occurs in the same connector, the operations of both drive assemblies are affected. Providing the drive side first positive sub-connector 921 and the drive side second positive sub-connector 922 can improve the situation in the related art where the operations of both drive assemblies are affected by the same connector, reducing the fault occurrence rate.

In the embodiments shown in FIG. 7, the drive side negative connector 94 includes a drive side first negative sub-connector 941 and a drive side second negative sub-connector 942; a first terminal of the negative line 11 is connected to the power supply side negative connector 93, and a second terminal of the negative line 11 is connected to both the drive side first negative sub-connector 941 and the drive side second negative sub-connector 942; and the drive side first negative sub-connector 941 is connected to a second terminal of the first drive assembly 2, and the drive side second negative sub-connector 942 is connected to a second terminal of the second drive assembly 3.

In this way, the second terminal of the first drive assembly 2 and the second terminal of the second drive assembly 3 are respectively connected to different connectors, eliminating the need to bundle a wire of the second terminal of the first drive assembly 2 and a wire of the second terminal of the second drive assembly 3 together and connect the wires to the same connector, improving wiring convenience. Additionally, in the related art where the second terminal of the first drive assembly 2 and the second terminal of the second drive assembly 3 are connected to the same connector, when a fault occurs in the same connector, the operations of both drive assemblies are affected. In these embodiments, providing the drive side first negative sub-connector 941 and the drive side second negative sub-connector 942 can improve the situation in the related art where the operations of both drive assemblies are affected by the same connector, reducing the fault occurrence rate.

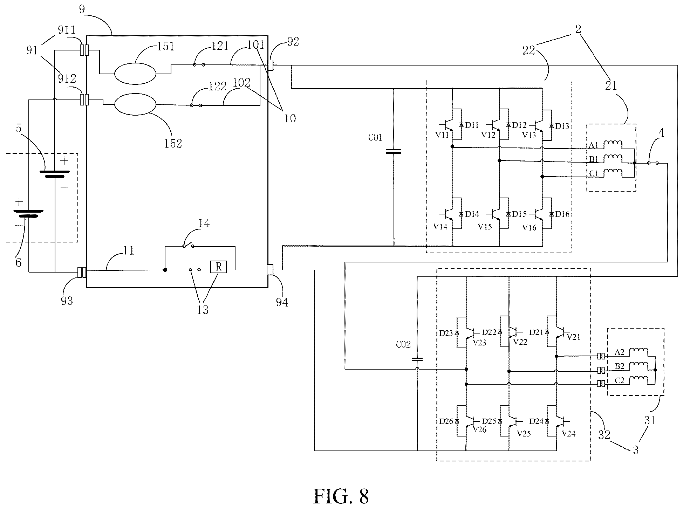

Referring to FIG. 8, in some embodiments of this application, the battery includes a first sub-battery 5 and a second sub-battery 6; the power supply side positive connector 91 includes a power supply side first positive sub-connector 911 and a power supply side second positive sub-connector 912; the positive line 10 includes a first positive branch 101 and a second positive branch 102; a first terminal of the first positive branch 101 is connected to the power supply side first positive sub-connector 911, a first terminal of the second positive branch 102 is connected to the power supply side second positive sub-connector 912, and a second terminal of the first positive branch 101 and a second terminal of the second positive branch 102 are both connected to the drive side positive connector 92; a positive electrode of the first sub-battery 5 is connected to the power supply side first positive sub-connector 911, and a positive electrode of the second sub-battery 6 is connected to the power supply side second positive sub-connector 912; and a negative electrode of the first sub-battery 5 and a negative electrode of the second sub-battery 6 are both connected to the power supply side negative connector 93.

Providing two sub-batteries can provide more power supply line options for the first drive assembly and the second drive assembly, achieving flexible configuration of a power supply circuit structure, and allowing the other sub-battery to supply power to the first drive assembly and the second drive assembly in case of a fault or insufficient power in one sub-battery, thereby reducing the probability of power supply failure due to a fault or insufficient power in the power supply module.

Additionally, the positive electrode of the first sub-battery 5 and the positive electrode of the second sub-battery 6 are respectively connected to different connectors, eliminating the need to bundle a positive wire of the first sub-battery 5 and a positive wire of the second sub-battery 6 together and connect the positive wires to the same connector, improving wiring convenience. Additionally, if the positive electrode of the first sub-battery 5 and the positive electrode of the second sub-battery 6 are connected to the same connector, when a fault occurs in the same connector, faults occur in power supply lines of both sub-batteries, and the operations of both drive assemblies are affected. Providing the power supply side first positive sub-connector and the power supply side second positive sub-connector can improve the situation where the power supply lines of both sub-batteries are affected by the same connector, reducing the battery power supply failure occurrence rate.

In some embodiments of this application, the first positive branch 101 is provided with a first positive branch current sensor 151 and a first positive branch switch 121; and the second positive branch 102 is provided with a second positive branch current sensor 152 and a second positive branch switch 122. The current sensors enable detection of the magnitude of current flowing through the battery, help to determine whether a fault occurs in the circuit based on the detected current, and enable adjustment of some control processes based on the current.

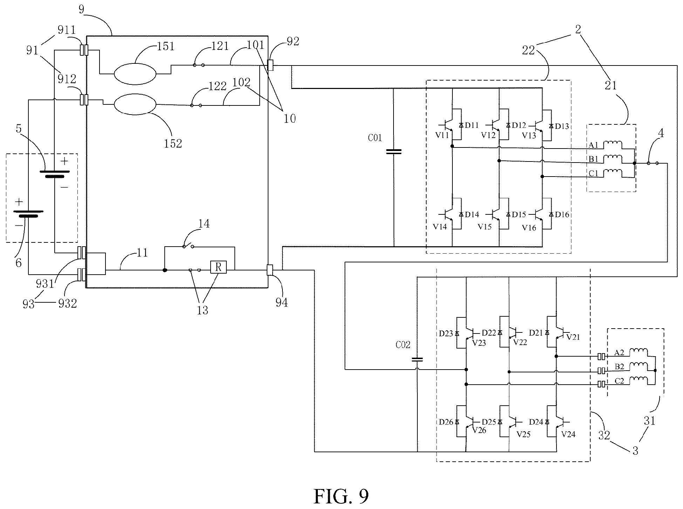

Referring to FIG. 9, in some embodiments of this application, the power supply side negative connector 93 includes a power supply side first negative sub-connector 931 and a power supply side second negative sub-connector 932; the negative electrode of the first sub-battery 5 is connected to the power supply side first negative sub-connector 931, and the negative electrode of the second sub-battery 6 is connected to the power supply side second negative sub-connector 932; and the power supply side first negative sub-connector 931 and the power supply side second negative sub-connector 932 are both connected to the first terminal of the negative line 11.

In this way, the negative electrode of the first sub-battery 5 and the negative electrode of the second sub-battery 6 are respectively connected to different connectors, eliminating the need to bundle a negative wire of the first sub-battery and a negative wire of the second sub-battery 6 together and connect the negative wires to the same connector, improving wiring convenience. Additionally, if the negative electrode of the first sub-battery 5 and the negative electrode of the second sub-battery 6 are connected to the same connector, when a fault occurs in the same connector, faults occur in power supply lines of both sub-batteries, and the operations of both drive assemblies are affected. In these embodiments, providing the power supply side first negative sub-connector and the power supply side second negative sub-connector can improve the situation where the power supply lines of both sub-batteries are affected by the same connector, reducing the battery power supply failure occurrence rate.

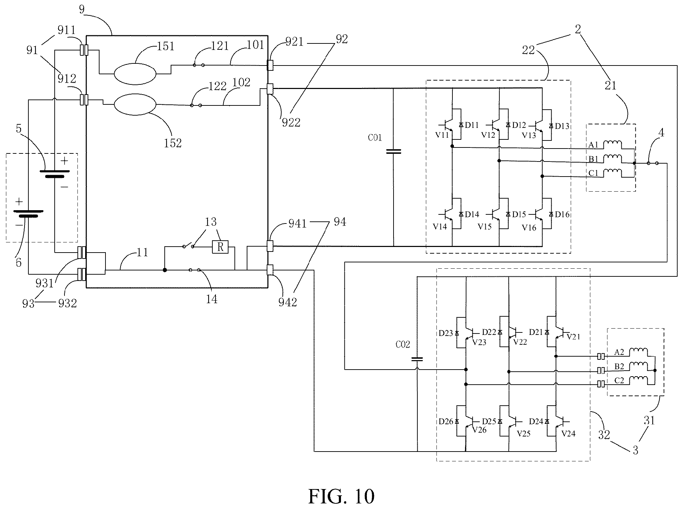

Referring to FIG. 10, in some embodiments of this application, the drive side positive connector 92 includes a drive side first positive sub-connector 921 and a drive side second positive sub-connector 922; the second terminal of the first positive branch 101 is connected to the drive side first positive sub-connector 921; the second terminal of the second positive branch 102 is connected to the drive side second positive sub-connector 922; and the first terminal of the first drive assembly 2 is connected to the drive side first positive sub-connector 921, and the first terminal of the second drive assembly 3 is connected to the drive side second positive sub-connector 922.

In this way, the first terminal of the first drive assembly 2 and the first terminal of the second drive assembly 3 are respectively connected to different connectors, eliminating the need to bundle a wire of the first terminal of the first drive assembly 2 and a wire of the first terminal of the second drive assembly 3 together and connect the wires to the same connector, improving wiring convenience. Additionally, the second terminal of the first positive branch 101 and the second terminal of the second positive branch 102 are respectively connected to different connectors, eliminating the need to bundle a wire of the second terminal of the first positive branch 101 and a wire of the second terminal of the second positive branch 102 together and connect the wires to the same connector, improving wiring convenience.

The drive side negative connector 94 includes a drive side first negative sub-connector 941 and a drive side second negative sub-connector 942; the second terminal of the first drive assembly 2 is connected to the drive side first negative sub-connector 941, and the second terminal of the second drive assembly 3 is connected to the drive side second negative sub-connector 942; and the drive side first negative sub-connector 941 and the drive side second negative sub-connector 942 are both connected to the second terminal of the negative line 11.

In this way, the second terminal of the first drive assembly 2 and the second terminal of the second drive assembly 3 are respectively connected to different connectors, eliminating the need to bundle a wire of the second terminal of the first drive assembly 2 and a wire of the second terminal of the second drive assembly 3 together and connect the wires to the same connector, improving wiring convenience. Additionally, in the related art where the second terminal of the first drive assembly and the second terminal of the second drive assembly are connected to the same connector, when a fault occurs in the same connector, the operations of both drive assemblies are affected. In these embodiments, providing the drive side first negative sub-connector 941 and the drive side second negative sub-connector 942 can improve the situation in the related art where the operations of both drive assemblies are affected by the same connector, reducing the fault occurrence rate.

The above descriptions of the various embodiments tend to emphasize the differences between the embodiments, and their similarities or identical aspects can be referenced mutually; and for brevity, details are not repeated herein.

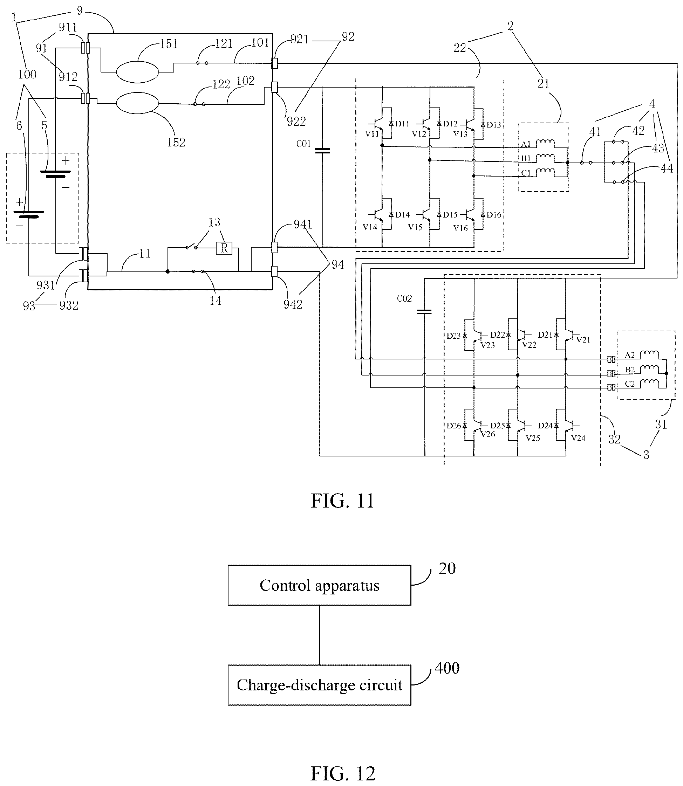

The following describes a charge-discharge circuit 400 provided by an embodiment of this application by using a specific example. As shown in a schematic diagram of the charge-discharge circuit 400 in FIG. 11, the charge-discharge circuit 400 includes a power supply module 1, a first drive assembly 2, a second drive assembly 3, and a first switch module 4. The power supply module 1 includes a battery 100 and a master control box 9, where the battery 100 includes a first sub-battery 5 and a second sub-battery 6.

The first drive assembly 2 includes a first motor 21 and a first motor controller 22 connected to the first motor 21. The second drive assembly 3 includes a second motor 31 and a second motor controller 32 connected to the second motor 31. The first motor controller 22 has three legs, and the first motor 21 has three windings. The second motor controller 32 included in the second drive assembly 3 has three legs, and the second motor 31 has three windings.

The first motor controller 22 and the second motor controller 32 each include a plurality of legs. Each leg includes an upper leg and a lower leg, where each leg in the first motor controller 22 is connected in one-to-one correspondence with each phase winding in the first motor 21, and a connection point of an upper leg and a lower leg in a leg is connected to a corresponding phase winding in the first motor 21. Legs in the second motor controller 32 are connected to windings in the second motor 31 in a same manner. Details are not repeated herein.

In the first motor controller 22, upper legs of legs are connected in a common line, where the upper legs are connected together to a second positive connector 92. Lower legs of legs are connected in a common line, where the lower legs are connected together to a second negative connector 94.

In the second motor controller 32, upper legs of legs are connected in a common line, where the upper legs are connected together to the second positive connector 92. Lower legs of legs are connected in a common line, where the lower legs are connected together to the second negative connector 94.

The battery master control box 9 is provided with a power supply side positive connector 91, a drive side positive connector 92, a power supply side negative connector 93, and a drive side negative connector 94, enabling convenient connection of positive and negative electrodes of the first sub-battery 5 and the second sub-battery 6 to the battery master control box 9 via wires, and enabling convenient connection of the first drive assembly 2 and the second drive assembly 3 to the battery master control box 9, thereby improving wiring convenience.

The first switch module 4 includes a main switch 41 and three sub-switches, where the three sub-switches are a first sub-switch 42, a second sub-switch 43, and a third sub-switch 44, respectively. A first terminal of the main switch 41 is connected to a neutral point of the first motor 21; first terminals of the sub-switches are connected to a second terminal of the main switch, and second terminals of the sub-switches are respectively connected to connection points of upper legs and lower legs of different legs in the second motor controller 32. In a driving mode, the main switch 41, the first sub-switch 42, the second sub-switch 43, and the third sub-switch 44 are all turned off. Turning on the main switch 41 and at least one of the three sub-switches at the same time enables a series connection between the first motor 21 and the second motor controller 32; and coordinated operations of legs in the first motor controller 22 and legs in the second motor controller 32 enable the first sub-battery 5 or the second sub-battery 6 to enter a self-heating mode.

The main switch 41 enables control of the connection and disconnection between the first motor 21 and the second motor controller 32, and the plurality of sub-switches enable more flexible selection of the connection and disconnection of multiple legs in the second motor controller 32, achieving entry into the battery self-heating mode by turning on the main switch and at least one sub-switch, and achieving deactivation of the battery self-heating mode by controlling the turn-off of the main switch.

The power supply side positive connector 91 includes a power supply side first positive sub-connector 911 and a power supply side second positive sub-connector 912; a positive line 10 includes a first positive branch 101 and a second positive branch 102; a first terminal of the first positive branch 101 is connected to the power supply side first positive sub-connector 911, a first terminal of the second positive branch 102 is connected to the power supply side second positive sub-connector 912, and a second terminal of the first positive branch 101 and a second terminal of the second positive branch 102 are both connected to the drive side positive connector 92; a positive electrode of the first sub-battery 5 is connected to the power supply side first positive sub-connector 911, and a positive electrode of the second sub-battery 6 is connected to the power supply side second positive sub-connector 912; and a negative electrode of the first sub-battery 5 and a negative electrode of the second sub-battery 6 are both connected to the power supply side negative connector 93.

The first positive branch 101 is provided with a first positive branch current sensor 151 and a first positive branch switch 121; and the second positive branch 102 is provided with a second positive branch current sensor 152 and a second positive branch switch 122. The current sensors enable detection of the magnitude of current flowing through the battery, help to determine whether a fault occurs in the circuit based on the detected current, and enable adjustment of some control processes based on the current.

The drive side positive connector 92 includes a drive side first positive sub-connector 921 and a drive side second positive sub-connector 922; the second terminal of the first positive branch 101 is connected to the drive side first positive sub-connector 921; the second terminal of the second positive branch 102 is connected to the drive side second positive sub-connector 922; and a first terminal of the first drive assembly 2 is connected to the drive side first positive sub-connector 921, and a first terminal of the second drive assembly 3 is connected to the drive side second positive sub-connector 922.

The power supply side negative connector 93 includes a power supply side first negative sub-connector 931 and a power supply side second negative sub-connector 932; the negative electrode of the first sub-battery 5 is connected to the power supply side first negative sub-connector 931, and the negative electrode of the second sub-battery 6 is connected to the power supply side second negative sub-connector 932; and the power supply side first negative sub-connector 931 and the power supply side second negative sub-connector 932 are both connected to a first terminal of a negative line 11. The negative line 11 is provided with a main negative switch 14 and a pre-charge circuit 13 connected in parallel with the main negative switch 14. The pre-charge circuit 13 includes a pre-charge switch and a resistor R connected in series. The pre-charge switch may alternatively be a switch capable of being controlled to be turned on or off via a signal, for example, a relay or an IGBT tube.

The drive side negative connector 94 includes a drive side first negative sub-connector 941 and a drive side second negative sub-connector 942; the first terminal of the negative line 11 is connected to the power supply side negative connector 93, and a second terminal of the negative line 11 is connected to both the drive side first negative sub-connector 941 and the drive side second negative sub-connector 942; and the drive side first negative sub-connector 941 is connected to a second terminal of the first drive assembly 2, and the drive side second negative sub-connector 942 is connected to a second terminal of the second drive assembly 3. The second terminal of the first drive assembly 2 is connected to the drive side first negative sub-connector 941, and the second terminal of the second drive assembly 3 is connected to the drive side second negative sub-connector 942; and the drive side first negative sub-connector 941 and the drive side second negative sub-connector 942 are both connected to the second terminal of the negative line 11.

The battery master control box 9 is configured to control the connection of the first sub-battery 5 and the second sub-battery 6 to the first drive assembly 2 and the second drive assembly 3.

Additionally, a capacitor C01 connected in parallel with the legs is present in the first motor controller 22 included in the first drive assembly 2, and a capacitor C02 connected in parallel with the legs is present in the second motor controller 32 included in the second drive assembly 3. The pre-charge circuit 13 may also be configured to protect the capacitors C01 and C02 in case of overvoltage or overcurrent operation of the circuit, reducing the occurrence of damage to the capacitors C01 and C02.

Providing two sub-batteries can provide more power supply line options for the first drive assembly 2 and the second drive assembly 3, achieving flexible configuration of a power supply circuit structure, and allowing the other sub-battery to supply power to the first drive assembly and the second drive assembly in case of a fault or insufficient power in one sub-battery, thereby reducing the probability of power supply failure due to a fault or insufficient power in the power supply module.

Additionally, the positive electrode of the first sub-battery 5 and the positive electrode of the second sub-battery 6 are respectively connected to different connectors, eliminating the need to bundle a positive wire of the first sub-battery 5 and a positive wire of the second sub-battery 6 together and connect the positive wires to the same connector, improving wiring convenience. If the positive electrode of the first sub-battery 5 and the positive electrode of the second sub-battery 6 are connected to the same connector, when a fault occurs in the same connector, faults occur in power supply lines of both sub-batteries, and the operations of both drive assemblies are affected. Providing the power supply side first positive sub-connector and the power supply side second positive sub-connector can improve the situation where the power supply lines of both sub-batteries are affected by the same connector, reducing the battery power supply failure occurrence rate.

In practical application, the second sub-battery 6 needs to enter a heating mode, the first positive branch switch 121 is turned off, and the main switch 41, the first sub-switch 42, the second sub-switch 43, and the third sub-switch 44 are all turned on, enabling a series connection between the first motor 21 and the second motor controller 32; and all upper legs in the first motor controller 22 are turned on, all lower legs in the first motor controller 22 are turned off, all upper legs in the second motor controller 32 are turned off, and all lower legs in the second motor controller 32 are turned on, such that a current passes through the positive electrode of the second sub-battery 6, the first motor controller 22, the first motor 21, the second motor controller 32, and the negative electrode of the second sub-battery 6 to form a loop, enabling the second sub-battery 6 to enter the self-heating mode.

When the first sub-battery 5 needs to enter a heating mode, the second positive branch switch 122 is turned off, and the main switch 41, the first sub-switch 42, the second sub-switch 43, and the third sub-switch 44 are all turned on, enabling a series connection between the first motor 21 and the second motor controller 32; and all upper legs in the second motor controller 32 are turned on, all lower legs in the second motor controller 32 are turned off, all upper legs in the first motor controller 22 are turned off, and all lower legs in the first motor controller 22 are turned on, such that a current passes through the positive electrode of the first sub-battery 5, the second motor controller 32, the first motor 21, the first motor controller 22, and the negative electrode of the first sub-battery 5 to form a loop, enabling the first sub-battery 5 to enter the self-heating mode.

The above descriptions of the various embodiments tend to emphasize the differences between the embodiments, and their similarities or identical aspects can be referenced mutually; and for brevity, details are not repeated herein.

Another embodiment of this application provides an electric device. As shown in FIG. 12, the electric device includes a control apparatus 20 and the charge-discharge circuit 400 provided by any of the above embodiments, where the control apparatus 20 is communicatively connected to a switch element in the charge-discharge circuit 400, and the switch element at least includes the first switch module 4.

The switch element may also include switches provided in the battery master control box 9 or switches in the legs of the first motor controller 22 and the second motor controller 32. The control apparatus 20 may be a motor controller, a vehicle controller, or a domain controller. The electric device may be any device including a single battery and dual motors, for example, an electric vehicle, an electric ship, or an aircraft.

Through the automatic control of the switch element in the charge-discharge circuit 400 by the control apparatus 20, turning off or on the switch element enables flexible switching between different circuit loops, thereby achieving more functions, improving the flexibility and fault tolerance of the charge-discharge circuit control, increasing the functions that the entire circuit architecture can achieve, and enhancing the performance of the electric device.

The above descriptions of the various embodiments tend to emphasize the differences between the embodiments, and their similarities or identical aspects can be referenced mutually; and for brevity, details are not repeated herein.

It should be noted that the foregoing embodiments represent only the implementations of this application, and descriptions thereof are specific and detailed, but should not be construed as any limitations on the patent scope of this application. It should be noted that persons of ordinary skill in the art can further make several modifications and improvements without departing from the concept of this application, and all these modifications and improvements fall within the protection scope of this application. Therefore, the protection scope of this application should be subject to the appended claims.

## Claims

1. A charge-discharge circuit, comprising a power supply module, a first drive assembly, a second drive assembly, and a first switch module, wherein
the first drive assembly and the second drive assembly are connected in parallel between a positive terminal and a negative terminal of the power supply module; and
a terminal of the first switch module is connected to the first drive assembly, and another terminal of the first switch module is connected to the second drive assembly.

2. The charge-discharge circuit according to claim 1, wherein the first drive assembly comprises a first motor, and the second drive assembly comprises a second motor controller;
the first drive assembly and the second drive assembly are connected in parallel between the positive terminal and the negative terminal of the power supply module; and
a terminal of the first switch module is connected to a neutral point of the first motor, and another terminal of the first switch module is connected to a connection point of an upper leg and a lower leg of at least one leg in the second motor controller.

3. The charge-discharge circuit according to claim 1 or 2, wherein the first switch module comprises a main switch and a plurality of sub-switches; the number of the plurality of sub-switches is less than or equal to the number of legs in the second motor controller; a first terminal of the main switch is connected to the neutral point of the first motor; and first terminals of the sub-switches are connected to a second terminal of the main switch, and second terminals of the sub-switches are respectively connected to connection points of upper legs and lower legs of different legs in the second motor controller.

4. The charge-discharge circuit according to claim 1 or 2, wherein the first switch module comprises a plurality of sub-switches; the number of the plurality of sub-switches is equal to the number of legs in the second motor controller; and first terminals of the sub-switches are all connected to the neutral point of the first motor, and second terminals of the sub-switches are respectively connected in one-to-one correspondence to connection points of upper legs and lower legs of different legs in the second motor.

5. The charge-discharge circuit according to any one of claims 1 to 4, wherein the power supply module comprises a battery and a battery master control box, the battery master control box is provided with a power supply side positive connector, a drive side positive connector, a power supply side negative connector, and a drive side negative connector;
a positive line is connected between the power supply side positive connector and the drive side positive connector, and a negative line is connected between the power supply side negative connector and the drive side negative connector;
a positive terminal of the battery is connected to the power supply side positive connector, and a negative terminal of the battery is connected to the power supply side negative connector; and
the drive side positive connector is connected to both a first terminal of the first drive assembly and a first terminal of the second drive assembly; and
the drive side negative connector is connected to both a second terminal of the first drive assembly and a second terminal of the second drive assembly.

6. The charge-discharge circuit according to claim 5, wherein the positive line is provided with a main positive switch and a current sensor.

7. The charge-discharge circuit according to claim 5 or 6, wherein the drive side positive connector comprises a drive side first positive sub-connector and a drive side second positive sub-connector; a first terminal of the positive line is connected to the power supply side positive connector, and a second terminal of the positive line is connected to both the drive side first positive sub-connector and the drive side second positive sub-connector; and
the drive side first positive sub-connector is connected to the first terminal of the first drive assembly, and the drive side second positive sub-connector is connected to the first terminal of the second drive assembly.

8. The charge-discharge circuit according to any one of claims 5 to 7, wherein the drive side negative connector comprises a drive side first negative sub-connector and a drive side second negative sub-connector;
a first terminal of the negative line is connected to the power supply side negative connector, and a second terminal of the negative line is connected to both the drive side first negative sub-connector and the drive side second negative sub-connector; and
the drive side first negative sub-connector is connected to the second terminal of the first drive assembly, and the drive side second negative sub-connector is connected to the second terminal of the second drive assembly.

9. The charge-discharge circuit according to any one of claims 5 to 8, wherein the battery comprises a first sub-battery and a second sub-battery; the power supply side positive connector comprises a power supply side first positive sub-connector and a power supply side second positive sub-connector; the positive line comprises a first positive branch and a second positive branch;
a first terminal of the first positive branch is connected to the power supply side first positive sub-connector, a first terminal of the second positive branch is connected to the power supply side second positive sub-connector, and a second terminal of the first positive branch and a second terminal of the second positive branch are both connected to the drive side positive connector;
a positive electrode of the first sub-battery is connected to the power supply side first positive sub-connector, and a positive electrode of the second sub-battery is connected to the power supply side second positive sub-connector; and
a negative electrode of the first sub-battery and a negative electrode of the second sub-battery are both connected to the power supply side negative connector.

10. The charge-discharge circuit according to any one of claims 5 to 9, wherein the power supply side negative connector comprises a power supply side first negative sub-connector and a power supply side second negative sub-connector; the negative electrode of the first sub-battery is connected to the power supply side first negative sub-connector, and the negative electrode of the second sub-battery is connected to the power supply side second negative sub-connector; and the power supply side first negative sub-connector and the power supply side second negative sub-connector are both connected to a first terminal of the negative line.

11. The charge-discharge circuit according to any one of claims 5 to 10, wherein the drive side positive connector comprises a drive side first positive sub-connector and a drive side second positive sub-connector; the second terminal of the first positive branch is connected to the drive side first positive sub-connector; the second terminal of the second positive branch is connected to the drive side second positive sub-connector; the first terminal of the first drive assembly is connected to the drive side first positive sub-connector; and the first terminal of the second drive assembly is connected to the drive side second positive sub-connector.

12. The charge-discharge circuit according to any one of claims 5 to 11, wherein the first positive branch is provided with a first current sensor and a first positive branch switch; and the second positive branch is provided with a second current sensor and a second positive branch switch.

13. The charge-discharge circuit according to any one of claims 5 to 12, wherein the negative line is provided with a main negative switch and a pre-charge circuit connected in parallel with the main negative switch.

14. An electric device, comprising a control apparatus and the charge-discharge circuit according to any one of claims 1 to 13, wherein
the control apparatus is communicatively connected to a switch element in the charge-discharge circuit, and the switch element comprises at least the first switch module.
